# EUROPEAN PATENT SPECIFICATION

(11) **EP 1 172 399 B1**
(45) Date of publication and mention of the grant of the patent: **13.04.2005**
(21) Application number: 00202499.0
(22) Date of filing: 13.07.2000
(51) Int. Cl.: C08H 1/06, C08F 8/00, C08B 15/00

(54) **Method for polymer modification**
Verfahren zur Modifizierung von Polymerisaten
Procédé de modification de polymères

(43) Date of publication of application: 16.01.2002
(73) Proprietor: Fuji Photo Film B.V., 5047 TK Tilburg (NL)
(72) Inventor: Kluijtmans, Sebastianus Gerardus Johannes Maria, 3525 VL Utrecht (NL); Toda, Yuzo, 5051 KZ Goirle (NL); Bouwstra, Jan Bastiaan, 3721 AJ Bilthoven (NL)
(74) Representative: Prins, Adrianus Willem, Mr. Ir.

(56) References cited:
- GB-A- 1 304 966
- DATABASE WPI Week 199934 Derwent Publications Ltd., London, GB; AN 1999-397681 XP002154663 & JP 11 143002 A (FUJI PHOTO FILM CO LTD), 28 May 1999 (1999-05-28)
- DATABASE WPI Week 198142 Derwent Publications Ltd., London, GB; AN 1981-77257d XP002154664 & SU 798 119 A (KAZAN PHOTO CHEM IN), 25 January 1981 (1981-01-25)

## Description

### Background of the Invention

Functionalisation of polymers by covalent bonding of functional molecules to the polymer backbone is well-known. The polymer backbone itself can be a synthetic polymer or a natural polymer like gelatin, as long as it contains attachment sites for the functional groups. Extensively investigated is the coupling of carboxylic acids to the amine-groups of gelatin. The amide bond formed is quite stable and is not subject to hydrolysis in most circumstances. Natural gelatin and modified gelatins find their application in e.g. tissue engineering, pharmaceutical products, photographic products, and food industry. Examples of functionalised gelatins comprise but are not limited to: succinated gelatin (JP10310520), dodecenyl succinic gelatin (DE 19721238), hydroquinone gelatin (JPA 04-62548), gelatins with UV-absorber (JPA 03-161742), amine enriched gelatin (EP0813109), or fluorinated gelatin (US5087694).

Several coupling methods of carboxylic acids to the amine groups of gelatin have been described. In general coupling of carboxylic acids to amines can only occur with the aid of a carboxylic acid activator. Many carboxylic activators are described in EP0487686 and EP0576911 amongst which are carbodiimides, carbamoylpyridinium and carbamoyloxypyridinium compounds, and dication ethers. In general the activator is liberated again in the reaction mixture after coupling, hence implying the need for extensive purification of the polymer solution. Since the bulk application of modified polymers is strongly related to cheap and easy production processes, the necessary extra purification step forms a strong limitation in their use. Furthermore some of these activators induce crosslinking of gelatin itself.
Therefore the need for non-releasing activated carboxylic acids is evident. Non-releasing activated carboxylic acids, like cyclic acid anhydrides, couple to amine groups without releasing compounds. However these compounds are limited to di-carboxylic acids for which ring-closure, i.e. anhydride formation, is possible. Currently available cyclic anhydrides are restricted to phtalic anhydride, trimelitic anhydride, maleic anhydride, and succinic anhydride.

### Summary of the invention

To overcome this limitation, this invention describes a new method to convert functional molecules with a single carboxy group into a cyclic anhydride. As a result any functional molecule containing at least one carboxyl group can be coupled to amine groups of synthetic or natural polymers without releasing any compounds in the coupling step to the polymer, and hence without the necessity for additional polymer purification.

The invention relates to a new process of coupling a functional molecule, R-COOH, to a water soluble polymer, comprising a modification of a functional group with one carboxy group into a functional group with a cyclic anhydride by the use of glutamic or aspartic acid and coupling this cyclic anhydride to the amine group of a water soluble polymer.

Another object of the present invention is to prepare functionalised polymers free from carboxylic acid activator, which are applied in photographic elements, with the functional group having at least the same activity as functionalised polymers prepared with a releasing activator, without the negative side-effects of the carboxylic acid activator on the photographic properties.

### Detailed description

The invention is a new method to couple a functional group to a polymer comprising:
- modification of a functional group with one carboxy group, R-COOH, into a cyclic anhydride by coupling with a compound chosen from the group of aspartic acid (n=1), glutamic acid (n=2), or derivatives thereof, followed by dehydration (see reaction scheme 1)
- coupling of this cyclic anhydride to a free amine group of the polymer, without a leaving group.

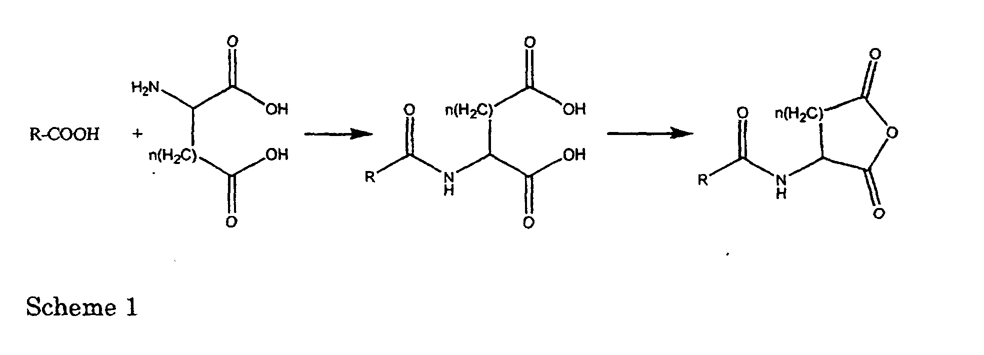

The coupling of the carboxy group of the functional molecule with the amine group of aspartic acid or glutamic acid can be achieved by activation of the carboxylic acid of the functional molecule. Examples of activation procedures are similar to those for direct coupling of the functional molecule to the polymer. Examples are described in EP 0 487 686 and EP 0 576 911, and include, but are not limited to carbodiimides, carbamoylpyridinium and carbamoyloxypyridinium compounds, dication ethers. Yet another carboxylic acid activation method is to use carbodiimides in combination with N-hydroxysuccinimide.

The resulting di-carboxylic acid can be easily purified from activator or unreacted material by usual synthetic organic methods like crystallisation, or extraction.

Dehydration of the di-carboxylic acid derivative into the cyclic anhydride can be obtained by conventional techniques such as heating, or reaction with thionyl chloride, or treatment with DCC.

The reaction of cyclic anhydrides with alcohols or amines (see scheme 2) occurs generally under basic conditions in pH ranges from 7-13. In case gelatin is used as polymer backbone the pH should be below pH 11 to avoid extensive hydrolysis. Elevated temperatures may be used to increase the coupling rate. In case the polymer is gelatin, prolonged exposure to temperatures above 70°C is undesirable due to the fast hydrolysis at these temperatures.

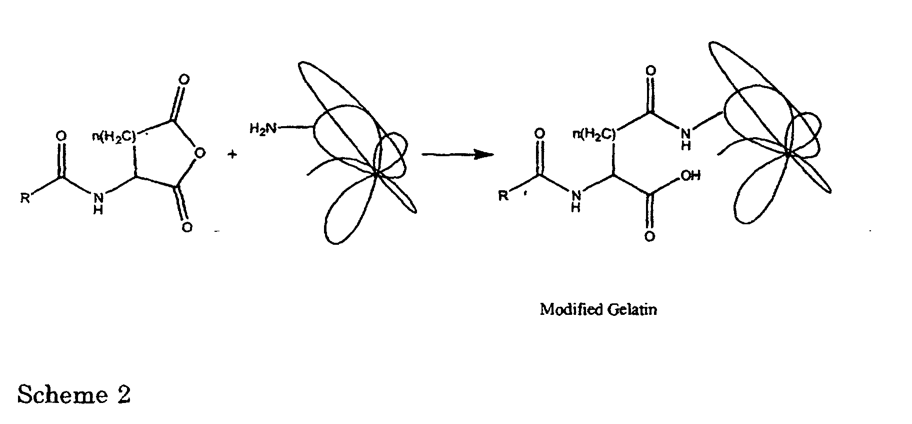

The functional molecules R to be used for the chemical linking with the polymers are selected based on their purpose. For example, as described in JPA 04-62548 di-hydroxy benzoic acid can be coupled to gelatin to serve as oxidised developer scavenger in color separating intermediate layers of photographic products. Other examples of functional groups that can be coupled in the same manner comprise UV-absorbers, like cyan substituted butamines, acetylenic compounds, hydroxyphenyl, benzotriazoles, triazines, or optical brightners such as thiophenes, stilbenes, triazines, imidazolones, pyrazolines, triazoles, and acetylenes.

In case the specific functional molecule does not contain a carboxy group for coupling with the amine group of aspartic or glutamic acid, known synthesis methods can be applied to insert such a carboxy group at the functional molecule.

The polymers to be used for the chemical linking with the functional molecules should at least contain amine reaction sites. The preferred polymers to be applied in photographic systems should be water soluble in order to be compatible with the other coated species. Examples comprise, but are not limited to casein, albumin, sericin, soluble collagen, gelatine, poly-lysine, poly acrylamide, polyvinyl-imidazole, polyvinyl-pyrazole, cellulose derivatives, saccharine derivatives. The most preferred water soluble polymer for our invention is gelatine. Gelatine is a degradation product of bone or skin collagen, which is treated by acid, base, or enzymes. Also recombinant gelatines are currently produced. In general chemical modifications on gelatin take place on free hydroxyl, carboxylic acid or amine groups. The natural gelatine contains ca. 48 mmol/100 g free amine groups originating from the lysine and hydroxy-lysine amino acids present in the peptide chain, hence determining the maximum amount of functional molecules that can be coupled. However, other polymers may have different maximum load, depending on their amine content. For example, it is possible to use amine-enriched gelatins, i.e. gelatins in which part of the carboxylic acid groups or amine groups is chemically modified with di- or tri-amines as described in EP-0 813 109. Also specific polymers with a higher amine content than natural gelatin can be synthetically manufactered with recombinant technology.

Yet another method to increase the maximum load of functional molecules that can be applied with this invention is to attach more than one functional molecule to one carboxy group via the use of spacer molecules Y. Hence the total formula of the functional compound becomes (R)ₙ-Y-COOH

The invention is now further elucidated based on the following examples:

### Example 1) Invention: Coupling of 2,5-dihydroxy benzoic acid (DHBA) to gelatin via a cylic anhydride

### Step 1: preparation of NHS activated DHBA

2,5-dihydroxy benzoic acid is first activated by treatment with DCC and NHS in THF. To a stirred solution of 9.25 g (60 mmole) 2,5-dihydroxybenzoic acid in 450 ml of THF, 7.14 g (62 mmole) N-hydroxysuccinimide (NHS) and 12.8 g (62 mmole) dicyclohexylcarbodiimide (DCC) were added. After filtering off the formed dicyclohexylureum (DCU), the solution was concentrated by vacuum evaporation until crystallisation of the DHBA-NHS started. The solution was stored at 5 degrees for 12 hrs and the resulting DHBA-NHS precipitate was collected by filtration. After drying the yield of the reaction was ca 70%.

### Step 2: preparation of the anhydride (scheme 3)

The activated DHBA thus prepared is dissolved in an acetone/water mixture after which L-aspartic acid and a small amount of triethylamine are added. The dicarboxylic compound formed was isolated from the reaction mixture by crystallisation after neutralizing the reaction mixture. After recrystallisation the yield was 67%. Treatment of the dicarboxylic acid by DCC in THF or thionylchloride in ethylacetate yielded the anhydride in a yield of 85%.

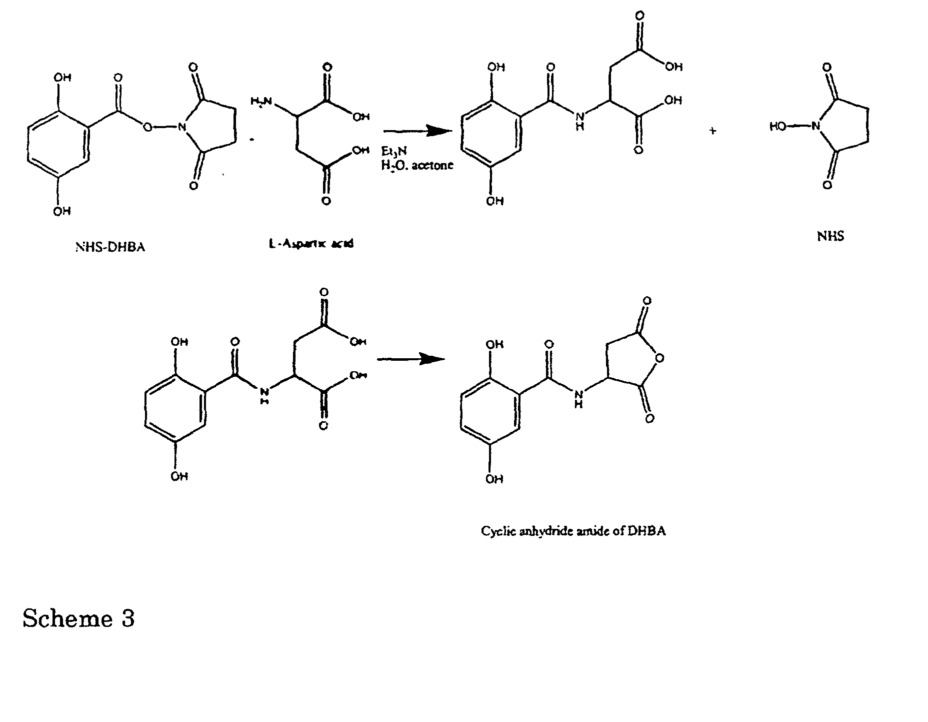

### Step 3: coupling of the anhydride to gelatin

The coupling of the hydroquinone anhydride to gelatin was achieved by adding 7.3 g anhydride in steps to 2 1 of a stirred aqueous gelatin solution with a concentration of 10% m/v. During the reaction the pH of the solution was kept at 8 by continuous adjustment with a 1 M sodium hydroxide solution. After 2 hours the reaction was completed and the gelatin solution was adjusted to pH 6. After adding biocide the gelatine solution was gelled and stored at 5°C.

The load of the resulting hydroquinone gelatin was determined to be 15 mmol hydroquinone/100 g gelatin, which means that ca 30% of the free amine groups is linked to the functional molecule.

### Example 2)comparative example: direct coupling of NHS-DHBA to gelatin

### Step 1: preparation of the NHS-DHBA according to the step 1 in example 1).

### Step 2: coupling of NHS-DHBA to gelatine

7.3 g of NHS-DHBA was dissolved in 350 ml THF and added to 21 of a stirred aqueous gelatin solution with a concentration of 10% m/v. After 2 hours the reaction was completed. The gelatin solution was filtered, adjusted to pH=6, and biocide was added. The gelatine solution was gelled and stored at 5°C.

The load of the resulting hydroquinone gelatin was determined to be 14 mmol hydroquinone/100 g gelatin.

### Example 3) Application of hydroquinone gelatins (HQ-gelatins) in photographic interlayers as oxidised developer scavenger

As described in patent JPA 04-62548, hydroquinone gelatin are applied in the interlayers of silverhalide photographic elements and serves to prevent color contamination due to diffusion of oxidized developer molecules from one color layer to the other. The hydroquinone moiety reduces the oxidized developer to inactive developer.

The hydroquinone gelatins obtained in example 1 and 2 were applied in a photographic element consisting of 4 layers, comprising a blue recording color layer and a green recording color layer separated by an interlayer containing said hydroquinone gelatine, and an overcoat layer.

The color recording layers contained sensitized silver bromide base emulsion and oil dispersed color forming couplers.

The interlayer contained a mixture of hydroquinone gelatine and limed-bone gelatin in a ratio 2:1. As a reference also a sample with 100% limed-bone gelatine was prepared to determine the color contamination in the absence of hydroquinone gelatin. The coated amount of total interlayer gelatine was 1.0 g/m².

Said photographic elements were coated on a polyethylene coated paper base. After illumination with blue and green light and subsequent color development the color contamination of yellow in magenta and magenta in yellow was measured. As shown in table 1, the HQ-gelatin prepared via the new anhydride synthesis scheme shows similar functional behaviour, i.e. the prevention of colormix, compared to the HQ-gelatin resulting from example 2. Hence the invented functional modified polymer has the same T⁺-scavenging performance as the conventional polymer prepared with the releasing activator.

**Table 1:**

| Property | Invention: example 1 | Comparison: example 2 | No hydroquinone gelatin |
|---|---|---|---|
| Magenta color density in yellow | 0.023 | 0.025 | 0.5 |
| Yellow color density in magenta | 0.013 | 0.011 | 0.3 |

Moreover, it is shown in table 2 that the presence of released NHS-activator in the HQ-gelatin of example 2 results in an increased hardening speed of the HQ-gelatin with a commonly used hardener as 2,5-dichloro-hydroxytriazine. It is well-known to an expert in the field that increased emulsion hardening speed results in coating defects.

**Table 2:**

| Influence of NHS on the hardening speed of scavenger gelatins with 2,5-dichloro-hydroxytriazine. The hardening speed was characterised by the time required for the viscosity to rise to 100 cP. | | |
|---|---|---|
| | Invention: example 1 | Comparison: example 2 |
| Time η=100 cP (minutes) | 260 | 210 |

## Claims

1. Functional polymer comprising a functional molecule with one carboxy group, R-COOH coupled to a water soluble polymer comprising at least one amine group, using a coupling agent comprising at least one amine group and two carboxylic groups capable of forming a cyclic anhydride.

2. Functional polymer according to claim 1, having the formula P - (R')x
wherein P is a polymeric backbone, R' is 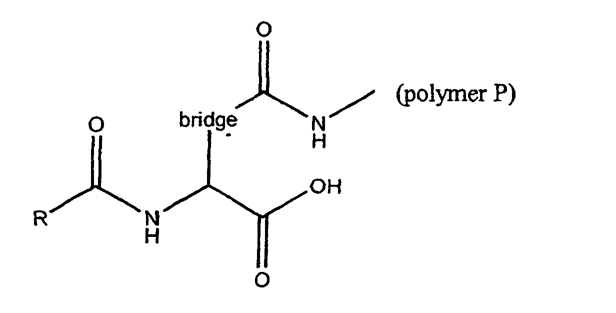 , x is the number of groups R' attached to the polymeric backbone, R is a functional group and "bridge" is an organic based molecule for bridging.

3. Functional polymer according to claim 1, having the formula P-(R')ₓ wherein P is a polymeric backbone, R' is 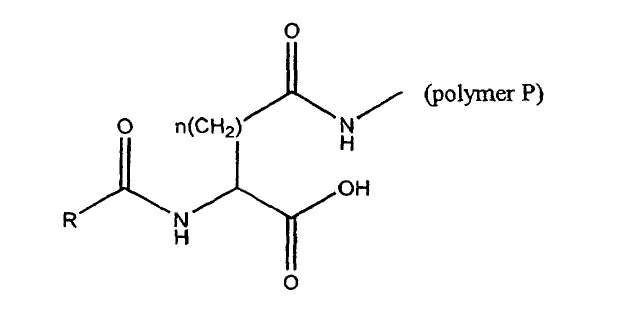 , x is the number of groups R' attached to the polymeric backbone, R is a functional group and n is 1 or 2.

4. Functional polymer according to claim 1, having the formula P - Rii -(R)x
wherein P is a polymeric backbone, Rii is 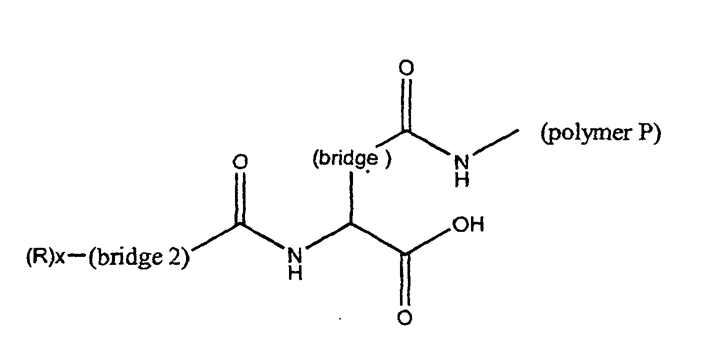 , x is the number of groups R attached to the molecule Rii, R is a functional group and "bridge 1" and "bridge 2" are organic based structures for bridging.

5. Functional polymer according to claim 1 - 4, prepared by coupling a functional molecule, R-COOH, to a water soluble polymer, comprising a modification of a functional group with one carboxy group into a functional group with a cyclic anhydride and coupling this cyclic anhydride to a water soluble polymer.

6. Functional polymer according to claim 5, wherein the cyclic anhydride is formed out of any di-carboxylic acid for which ring closure is possible.

7. Functional modified polymer according to any of the preceding claims, wherein the cyclic anhydride is formed out of an aspartic acid or a glutamic acid group.

8. Functional polymers according to any of the preceding claims, wherein the polymer is selected from the group consisting of casein, sericin, soluble collagen, gelatine, polyvinyl pyrrolidone, polyacrylamide, polyvinylimidazole, polyvinylpyrazole, cellulose derivatives and saccharide derivatives.

9. Functional polymer according to any of the preceding claims, wherein the polymer is selected from the group consisting of natural gelatines, alkaline processed gelatine, acid processed gelatine, hydrolysed gelatine, peptised gelatine resulting from enzymatic treatment and recombinant gelatines.

10. Functional polymer according to claims 1-7, wherein said functional group, R-, comprises :
- Developer scavenging groups, comprising a cresol type, a pyrogallol type, a catechol type, a hydrochinon type or a 2,4-disulphonamidophenol type molecule
- UV-light absorbing groups, comprising: cyan substituted butamines, acetylenic compounds, hydroxyphenyl, benzotriazoles, triazines and/or
- Optical brightening groups, comprising: thiophenes, stilbenes, triazines, imidazolones, pyrazolines, triazoles, acetylenes

11. Method for preparation of a functional polymer by coupling a functional molecule, R-COOH, to a water soluble polymer, comprising a modification of a functional group with one carboxy group into a functional group with a cyclic anhydride and coupling this cyclic anhydride to a water soluble polymer.

12. Method for preparation of a functional modified polymer according to claim 11, wherein the cyclic anhydride is formed out of any di-carboxylic acid for which ring closure is possible.

13. Method for preparation of a functional polymer according to claim 11 or 12, wherein the cyclic anhydride preferably is formed out of an aspartic acid or glutamic acid group.

14. Method for preparation of a functional polymer according to the claims 11-13, wherein the polymer is selected from the group consisting of casein, sericin, soluble collagen, gelatine, polyvinyl pyrrolidone, polyacrylamide, polyvinylimidazole, polyvinylpyrazole, cellulose derivatives and saccharide derivatives.

15. Method for preparation of a functional polymer according to the claims 11-14, wherein said water soluble polymer is selected from the group consisting of natural gelatines, alkaline processed gelatine, acid processed gelatine, hydrolysed gelatine, peptised gelatine resulting from enzymatic treatment and recombinant gelatines.

16. Method for preparation of a functional polymer according to claims 11-15, wherein said functional molecule, R-, comprises:
- Developer scavenging groups, comprising a cresol type, a pyrogallol type, a catechol type, a hydrochinon type or a 2,4-disulphonamidophenol type molecule
- UV-light absorbing groups, selected from the group of UV-absorbing dyes comprising cyan substituted butamines, acetylenic compounds, hydroxyphenyl, benzotriazoles, triazines and/or
- Optical brightening groups, comprising thiophenes, stilbenes, triazines, imidazolones, pyrazolines, triazoles, acetylenes.

17. Functional modifying agent, suitable for use in the method of any one of the claims 11-16, said agent comprising the amide addition product of a a functional molecule, R-COOH and a coupling agent comprising at least one amine group and two carboxylic groups capable of forming a cyclic anhydride, said agent having been dehydrated to the cyclic anhydride.

18. Functional modifying agent according to claim 17, having the formula

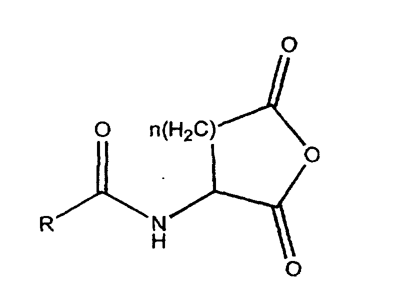

## Patentansprüche

1. Funktionelles Polymer, das ein funktionelles Molekül mit einer Carboxylgruppe, R-COOH, umfasst, das an ein wasserlösliches Polymer, das mindestens eine Aminogruppe umfasst, unter Verwendung eines Kopplungsagens gebunden ist, das mindestens eine Aminogruppe und zwei Carboxylgruppen umfasst, das in der Lage ist, ein cyclisches Anhydrid auszubilden.

2. Funktionelles Polymer gemäß Anspruch 1 mit der Formel P - (R')ₓ, worin P ein polymeres Grundgerüst ist, R' ist 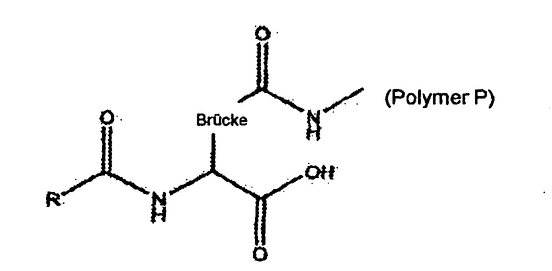 x ist die Anzahl der Gruppen R', die an das polymere Grundgerüst gebunden sind, R ist eine funktionelle Gruppe und "Brücke" ist ein organisch basierendes Molekül zur Brückenbildung.

3. Funktionelles Polymer gemäß Anspruch 1 mit der Formel P - (R')ₓ, worin P ein polymeres Grundgerüst ist, R' ist 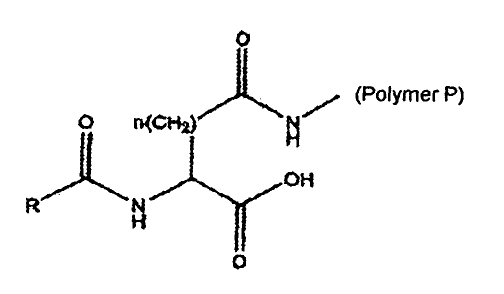 x ist die Anzahl der Gruppen R', die an das polymere Grundgerüst gebunden sind, R ist eine funktionelle Gruppe und n ist 1 oder 2.

4. Funktionelles Polymer gemäß Anspruch 1 mit der Formel P - Rii - (R)ₓ, worin P ein polymeres Grundgerüst ist, Rii ist 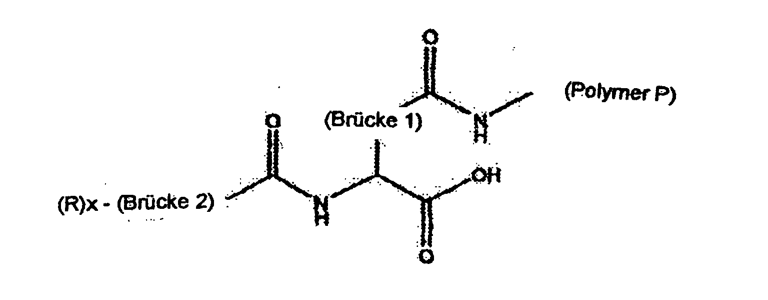 x ist die Anzahl der Gruppen R, die an das Molekül Rii gebunden sind, R ist eine funktionelle Gruppe und "Brücke 1" und "Brücke 2" sind organisch basierende Strukturen zur Brückenbildung.

5. Funktionelles Polymer gemäß Anspruch 1 - 4, das durch Kopplung eines funktionellen Moleküls, R-COOH, an ein wasserlösliches Polymer, umfassend eine Modifikation einer funktionellen Gruppe mit einer Carboxylgruppe in eine funktionelle Gruppe mit einem cyclischen Anhydrid und Kopplung dieses cyclischen Anhydrids an ein wasserlösliches Polymer hergestellt wird.

6. Funktionelles Polymer gemäß Anspruch 5, worin das cyclische Anhydrid aus jeglicher Dicarbonsäure ausgebildet wird, für die ein Ringschluss möglich ist.

7. Funktionell modifiziertes Polymer gemäß einem der vorangegangenen Ansprüche, worin das cyclische Anhydrid aus einer Asparaginsäure- oder einer Glutaminsäure gruppe hergestellt wird.

8. Funktionelle Polymere gemäß einem der vorangegangenen Ansprüche, worin das Polymer aus der Gruppe ausgewählt ist, die aus Casein, Sericin, löslichem Kollagen, Gelatine, Polyvinylpyrrolidon, Polyacrylamid, Polyvinylimidazol, Polyvinylpyrazol, Cellulosederivaten und Saccharidderivaten besteht.

9. Funktionelles Polymer gemäß einem der vorangegangenen Ansprüche, worin das Polymer aus der Gruppe ausgewählt ist, die aus natürlichen Gelatinearten, alkalisch verarbeiteter Gelatine, sauer verarbeiteter Gelatine, hydrolysierter Gelatine, peptisierter Gelatine resultierend aus enzymatischer Behandlung und rekombinanten Gelatinearten besteht.

10. Funktionelles Polymer gemäß den Ansprüchen 1 - 7, worin besagte funktionelle Gruppe R' folgendes umfasst
- Entwickler- entfernende Gruppen, die ein kresolartiges, ein pyrogallolartiges, ein catecholartiges, ein hydrochinonartiges oder ein 2,4-disulphonamidophenolartiges Molekül umfassen,
- UV-Licht- absorbierende Gruppen, die Cyan-substituierte Butamine, acetylenische Verbindungen, Hydroxyphenyl, Benztriazole, Trazine umfassen und/oder
- optische Aufhellergruppen, die Thiophene, Stilbene, Triazine, Imidazolone, Pyrazoline, Triazole, Acetylene umfassen.

11. Verfahren zur Herstellung eines funktionellen Polymers durch Kopplung eines funktionellen Moleküls, R-COOH, an ein wasserlösliches Polymer, umfassend eine Modifikation einer funktionellen Gruppe mit einer Carboxylgruppe in eine funktionelle Gruppe mit einem cyclischen Anhydrid und Kopplung dieses cyclischen Anhydrids an ein wasserlösliches Polymer.

12. Verfahren zur Herstellung eines funktionell modifizierten Polymers gemäß Anspruch 11, worin das cyclische Anhydrid aus jeglicher Dicarbonsäure hergestellt wird, für die ein Ringschluss möglich ist.

13. Verfahren zur Herstellung eines funktionellen Polymers gemäß Anspruch 11 oder 12, worin das cyclische Anhydrid vorzugsweise aus einer Asparaginsäure- oder Glutaminsäure-Gruppe ausgebildet wird.

14. Verfahren zur Herstellung eines funktionellen Polymers gemäß den Ansprüchen 11 -13, worin das Polymer aus der Gruppe ausgewählt ist, die aus Casein, Sericin, löslichem Kollagen, Gelatine, Polyvinylpyrrolidon, Polyacrylamid, Polyvinylimidazol, Polyvinylpyrazol, Cellulosederivaten und Saccharidderivaten besteht.

15. Verfahren zur Herstellung eines funktionellen Polymers gemäß den Ansprüchen 11 - 14, worin besagtes wasseriösliches Polymer aus der Gruppe ausgewählt ist, die aus natürlichen Gelatinearten, alkalisch verarbeiteter Gelatine, sauer verarbeiteter Gelatine, hydrolysierter Gelatine, peptisierter Gelatine, die aus enzymatischer Behandlung resultiert, und rekombinanten Gelatinearten besteht.

16. Verfahren zur Herstellung eines funktionellen Polymers gemäß den Ansprüche 11 - 15, worin besagtes funktionelles Molekül R- folgendes umfasst:
- Entwickler- entfernende Gruppen, die ein kresolartiges, ein pyrogallolartiges, ein catecholartiges, ein hydrochinonartiges oder ein 2,4-disulphonamidophenolartiges Molekül umfassen,
- UV-Licht- absorbierende Gruppen, die aus der Gruppe der UV-absorbierenden Farbstoffe, die Cyan-substituierte Butamine, acetylenische Verbindungen, Hydroxyphenyl, Benztriazole, Trazine umfasst, ausgewählt sind und/oder
- optische Aufhellergruppen, die Thiophene, Stilbene, Triazine, Imidazolone, Pyrazoline, Triazole, Acetylene umfassen.

17. Funktionell modifizierendes Agens, das zur Verwendung in dem Verfahren von einem der Ansprüche 11 - 16 geeignet ist, wobei besagtes Agens das Amidadditionsprodukt eines funktionellen Moleküls, R-COOH, und ein Kopplungsagens, das mindestens eine Aminogruppe und zwei Carboxylgruppen umfasst, das in der Lage ist, ein cyclisches Anhydrid auszubilden, umfasst, wobei besagtes Agens zu dem cyclischen Anhydrid dehydriert wurde,.

18. Funktionell modifizierendes Agens gemäß Anspruch 17 mit der Formel:

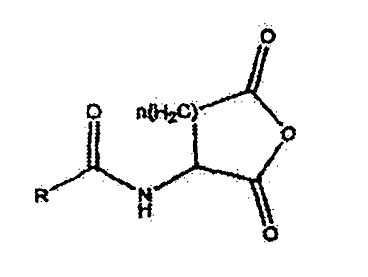

## Revendications

1. Polymère fonctionnel comprenant une molécule fonctionnelle ayant un groupe carboxyle, R-COOH, couplé à un polymère hydrosoluble comprenant au moins un groupe amine au moyen d'un agent de couplage comprenant au moins un groupe amine et deux groupes carboxyliques capables de former un anhydride cyclique.

2. Polymère fonctionnel selon la revendication 1, de formule P-(R')ₓ, dans lequel
P représente un squelette polymère,
R' représente 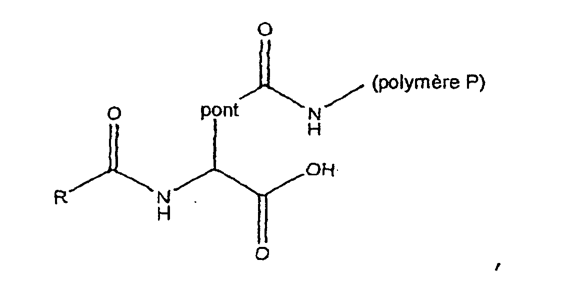 x représente le nombre de groupes R' reliés au squelette polymère,
R représente un groupe fonctionnel et le terme "pont" signifie une molécule à base organique de pontage.

3. Polymère fonctionnel selon la revendication 1, de formule P-(R')ₓ, dans lequel
P représente un squelette polymère,
R' représente 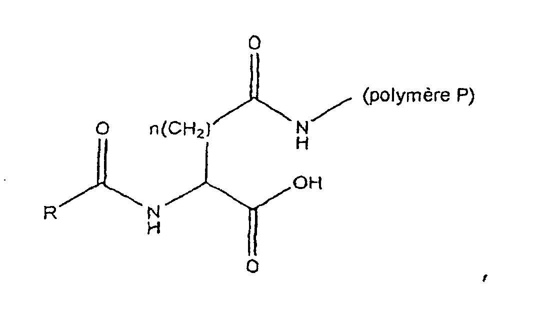 x représente le nombre de groupes R' reliés au squelette polymère,
R représente un groupe fonctionnel et n vaut 1 ou 2.

4. Polymère fonctionnel selon la revendication 1, de formule P-Rii-(R)ₓ dans lequel
P représente un squelette polymère,
Rii représente 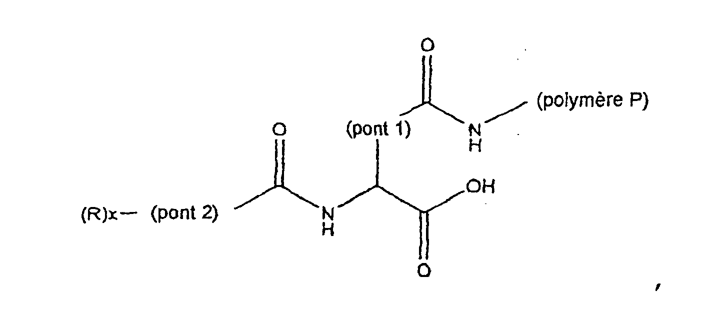 x représente le nombre de groupes R reliés à la molécule Rii,
R représente un groupe fonctionnel et le "pont 1" et le "pont 2" représentent des structures organiques basiques de pontage.

5. Polymère fonctionnel selon les revendications 1 à 4, préparé par couplage d'une molécule fonctionnelle, R-COOH, à un polymère hydrosoluble, comprenant une modification d'un groupe fonctionnel avec un groupe carboxyle en un groupe fonctionnel avec un anhydride cyclique et par couplage de cet anhydride cyclique à un polymère hydrosoluble.

6. Polymère fonctionnel selon la revendication 5, dans lequel l'anhydride cyclique se compose d'un acide dicarboxylique quelconque pour lequel une fermeture de cycle est possible.

7. Polymère fonctionnel modifié selon l'une quelconque des revendications précédentes, dans lequel l'anhydride cyclique est formé à partir d'un groupe acide aspartique ou acide glutamique.

8. Polymère fonctionnel modifié selon l'une quelconque des revendications précédentes, dans lequel le polymère est choisi dans le groupe constitué de la caséine, de la séricine, du collagène soluble, de la gélatine, de la polyvinylpyrrolidone, du polyacrylamide, du polyvinylimidazole, du polyvinylpyrazole, des dérivés de cellulose et des dérivés de saccharide.

9. Polymère fonctionnel modifié selon l'une quelconque des revendications précédentes, dans lequel le polymère est choisi dans le groupe constitué des gélatines naturelles, de la gélatine traitée par une base, de la gélatine traitée par un acide, de la gélatine hydrolysée, de la gélatine peptisée résultant d'un traitement enzymatique et des gélatines recombinantes.

10. Polymère fonctionnel selon les revendications 1 à 7, dans lequel ledit groupe fonctionnel, R-, comprend :
- les groupes de fixation de révélateur, comprenant une molécule de type crésol, de type pyrogallol, de type catéchol, de type hydroquinone ou de type 2,4-disulfonamidophénol,
- les groupes absorbant la lumière ultraviolette, comprenant : les butamines substituées cyan, les composés acétyléniques, l'hydroxyphényle, les benzotriazoles, les triazines et/ou
- les groupes d'azurants, comprenant : les thiophènes, les stilbènes, les triazines, les imidazolones, les pyrazolines, les triazoles, les acétylènes.

11. Procédé de préparation d'un polymère fonctionnel en couplant une molécule fonctionnelle, R-COOH, à un polymère hydrosoluble, comprenant une modification d'un groupe fonctionnel avec un groupe carboxyle en un groupe fonctionnel avec un anhydride cyclique et en couplant cet anhydride cyclique à un polymère hydrosoluble.

12. Procédé de préparation d'un polymère fonctionnel modifié selon la revendication 11, dans lequel l'anhydride cyclique est formé à partir d'un acide dicarboxylique quelconque pour lequel une fermeture de cycle est possible.

13. Procédé de préparation d'un polymère fonctionnel selon la revendication 11 ou 12, dans lequel l'anhydride cyclique est de préférence formé à partir d'un groupe acide aspartique ou acide glutamique.

14. Procédé de préparation d'un polymère fonctionnel selon les revendications 11 à 13, dans lequel le polymère est choisi dans le groupe constitué de la caséine, de la séricine, du collagène soluble, de la gélatine, de la polyvinylpyrrolidone, du polyacrylamide, du polyvinylimidazole, du polyvinylpyrazole, des dérivés de cellulose et des dérives de saccharide.

15. Procédé de préparation d'un polymère fonctionnel selon les revendications 11 à 14, dans lequel ledit polymère hydrosoluble est choisi dans le groupe constitué des gélatines naturelles, de la gélatine traitée par une base, de la gélatine traitée par un acide, de la gélatine hydrolysée, de la gélatine peptisée obtenue après un traitement enzymatique et des gélatines recombinantes.

16. Procédé de préparation d'un polymère fonctionnel selon les revendications 11 à 15, dans lequel ladite molécule fonctionnelle, R-, comprend :
- les groupes de fixation de révélateur, comprenant une molécule de type crésol, de type pyrogallol, de type catéchol, de type hydroquinone ou de type 2,4-disulfonamidophénol,
- les groupes absorbant la lumière ultraviolette, choisis dans le groupe des colorants absorbant la lumière comprenant les butamines substituées cyan, les composés acétyléniques, le groupe hydroxyphényle, les benzotriazoles, les triazines et/ou
- les groupes d'azurants, comprenant les thiophènes, les stilbènes, les triazines, les imidazolones, les pyrazolines, les triazoles, les acétylènes.

17. Agent de modification fonctionnel, approprié à une utilisation dans le procédé selon l'une quelconque des revendications 11 à 16, ledit agent comprenant le produit de l'addition à un amide d'une molécule fonctionnelle, R-COOH, et un agent de couplage comprenant au moins un groupe amine et deux groupes carboxyliques capables de former un anhydride cyclique, ledit agent ayant été déshydraté pour donner l'anhydride cyclique.

18. Agent de modification fonctionnel selon la revendication 17, de formule
